# EUROPÄISCHE PATENTSCHRIFT

(11) **EP 1 975 435 B1**
(45) Veröffentlichungstag und Bekanntmachung des Hinweises auf die Patenterteilung: **19.09.2012**
(21) Anmeldenummer: 08002620.6
(22) Anmeldetag: 13.02.2008
(51) Int. Cl.: F16D 1/076

(54) **Wellenverbindung**
Shaft coupling
Liaison d'arbre

(30) Priorität: 27.03.2007 DE 102007014448
(43) Veröffentlichungstag der Anmeldung: 01.10.2008
(73) Patentinhaber: Dr. Ing. h.c. F. Porsche AG, 70435 Stuttgart (DE)
(72) Erfinder: Höbel, Peter, 75242 Neuhausen (DE)

(56) Entgegenhaltungen:
- EP-A1- 0 315 922
- EP-A2- 1 605 178
- DE-A1- 2 165 891
- DE-A1- 3 831 647
- US-A- 1 947 965
- US-A- 3 971 097
- US-A1- 2002 152 567

## Beschreibung

Die Erfindung betrifft eine Verbindung einer Verbindungswelle, insbesondere einer zwischen zwei ortsfesten Getriebeteilen angeordneten Verbindungswelle, mit einer zu kuppelnden Welle.

Aus der DE-PS 267 924 ist eine Verbindungswelle zwischen zwei ortsfesten Getriebeteilen - Motor- und Wechselgetriebe - eines Fahrzeuges bekannt. Die Verbindungswelle ist mit den zu kuppelnden Wellen durch Vermittlung von in entsprechende Aussparungen eingreifenden, abgeflachten Mitnehmerköpfen verbunden. Das eine Ende der Verbindungswelle ist gegenüber der gekuppelten Welle durch eine auf diese geschraubte Überwurfmutter gegen Verschiebung gesichert. Nach Lösen der Überwurfmutter ist es möglich, die Verbindungswelle auszuschwingen und herauszunehmen. Konkret erfolgt die Verbindung der Verbindungswelle und der zu kuppelnden Welle über mit diesen verbundene Flansche, wobei der Flansch der Verbindungswelle einen rechteckigen Öffnungsquerschnitt und der Flansch der zu kuppelnden Welle einen komplementären rechteckigen Querschnitt aufeist, so dass die Flansche ineinandersteckbar sind. Die genannte Querschnittsform bedingt, dass die Verbindungswelle nur in im rechten Winkel zueinander angeordneten Richtungen seitlich ausgeschwenkt werden kann. Zum Montieren bzw. Demontieren der Verbindungswelle ist keine nennenswerte Axialverschiebung der Verbindungswelle erforderlich, weil diese mittels der Überwurfmutter befestigt wird.

Aufgabe der vorliegenden Erfindung ist es, eine baulich einfach gestaltete und einfach sowie achsgenau zu montierende Verbindung einer Verbindungswelle mit einer zu kuppelnden Welle anzugeben, insbesondere, wenn diese Verbindungswelle zwischen zwei ortsfesten Getriebeteilen anzuordnen ist.

Gelöst wird die Aufgabe durch eine Verbindung mit den Merkmalen des Patentanspruchs 1.

Wesentlich ist bei der Verbindung der Verbindungswelle mit der zu kuppelnden Welle zunächst, dass die Verbindungswelle und die zu kuppelnde Welle mittels Befestigungsmitteln verbindbar sind. Es ist somit ausreichend, im Bereich dieser Verbindung die feste Verbindung bereit zu stellen. Bei Anordnung der Verbindungswelle zwischen zwei ortsfesten Getriebeteilen kann die Verbindung der Verbindungswelle im Bereich ihres anderen Endes als einfache Steckverbindung gestaltet sein, insbesondere die Verbindungswelle in diesem Bereich als Vielzahnwelle ausgebildet sein.

Gemäß der Erfindung weist die Verbindungswelle endseitig einen Verbindungsflansch auf, der mit mehreren Armen versehen ist, wobei zwischen benachbarten Armen Zwischenräume gebildet sind. Die zu kuppelnde Welle ist in ihrem der Verbindungswelle zugewandten Bereich entsprechend komplementär ausgebildet. Die zu kuppelnde Welle weist endseitig einen Verbindungsflansch auf, der mit mehreren Armen versehen ist, wobei zwischen benachbarten Armen Zwischenräume gebildet sind. In fluchtender Anordnung der Arme von Verbindungswelle und zu kuppelnder Welle sind diese Arme mittels der Befestigungsmittel miteinander verbindbar. Bei diesen Befestigungsmitteln handelt es sich insbesondere um Schrauben, die Durchgangslöcher in den Armen des Verbindungsflansches der Verbindungswelle und Gewindebohrungen in den Armen des Verbindungsflansches der gekuppelten Welle durchsetzen. Die Befestigungsmittel stellen in Verbindung mit den Verbindungsflanschen eine einfach gestaltete und einfach zu montierende Verbindung von Verbindungswelle und zu kuppelnder Welle dar.

Gemäß der Erfindung sind bei gelösten Verbindungsmitteln die Verbindungswelle und die zu kuppelnde Welle um deren Achse relativ zueinander schwenkbar und es sind die Arme der Verbindungswelle in Flucht mit den Zwischenräumen der zu kuppelnden Welle bringbar. Da in dieser Schwenkstellung die Arme des Verbindungsflansches der Verbindungswelle bezüglich der Arme des Verbindungsflansches der zu kuppelnden Welle auf Lücke gesetzt sind, kann in dieser Stellung die Verbindungswelle axial in Richtung der zu kuppelnden Welle verschoben werden. Verbindet die Verbindungswelle zwei ortsfeste Getriebeteile, bedeutet dies in der Konsequenz, dass bei dieser axialen Relativverschiebung von Verbindungswelle zu der zu kuppelnden Welle die Verbindungswelle mit ihrem der zu kuppelnden Welle abgewandten Ende außer Eingriff mit der zu kuppelnden Welle des anderen ortsfesten Getriebeteils gelangt. Da sich die Arme der Verbindungswelle in einer Position befinden, in der sie die Zwischenräume der zu kuppelnden Welle durchsetzen, kann die Verbindungswelle in dieser Stellung mit ihrem der zu kuppelnden Welle abgewandten Ende seitlich ausgeschwenkt werden. In der ausgeschwenkten Stellung können die beiden Verbindungsflansche außer Eingriff gebracht werden, somit die Verbindungswelle und die zu kuppelnde Welle demontiert werden.

Die erfindungsgemäße Verbindung ist bestens geeignet, eine Verbindungswelle zwischen einem Vorderachsgetriebe und einem Abtrieb am eigentlichen Getriebe montieren und demontieren zu können. Dies ist auch dann möglich, wenn die Besonderheit vorliegt, dass die Verbindungswelle keine Gelenke hat und schräg zu koaxial zueinander liegenden Achsen der beiden Getriebe angeordnet ist. Diese beiden Getriebe sind insbesondere fest am Motor verschraubt, womit der Zugang zur Verschraubung im Fahrzeug nicht gewährleistet ist. Aufgrund des Winkels kann die Montage der Verbindungswelle nicht parallel zu der Montage des Getriebes am Motor erfolgen. Es ist eine separate Montage der Verbindungswelle erforderlich. Die erfindungsgemäße Verbindung kommt ohne ein in der Praxis üblicherweise erforderliches Zwischenstück aus, das axial verschiebbar ist und den Raum überbrückt, den die Verbindungswelle bei bekannten Lösungen nicht abdeckt, um zum Beispiel eine genügend lange Überdeckung in den Steckverzahnungen an beiden Seiten der Verbindungswelle zu gewährleisten. Dieses Zwischenstück ist bei den bekannten Lösungen zusätzlich zu befestigen und birgt die Gefahr einer Desachsierung der Verbindungswelle.

Die Erfindung schlägt eine Verbindung einer Verbindungswelle, insbesondere einer zwischen zwei ortsfesten Getriebeteilen angeordneten Verbindungswelle, mit einer zu kuppelnden Welle vor, die die beschriebenen Nachteile nicht aufweist.

Weitere Merkmale der Erfindung ergeben sich aus den Unteransprüchen, der Beschreibung der Zeichnung und der Zeichnung selbst, ohne hierauf beschränkt zu sein.

In der Zeichnung ist ein bevorzugtes Ausführungsbeispiel der Erfindung veranschaulicht, ohne hierauf beschränkt zu sein. Es stellt dar:
- Fig. 1A: den Einbauzustand einer Verbindungswelle zwischen einem ortsfesten Verteilergetriebe und einem ortsfesten Vorderachsgetriebe,
- Fig. 1B: die in Fig. 1A gezeigte Anordnung in einem ersten Demontageschritt,
- Fig. 1C: die in Fig. 1A gezeigte Anordnung in einem zweiten Demontageschritt,
- Fig. 1D: die in Fig. 1A gezeigte Anordnung in einem dritten Demontageschritt,
- Fig. 2A: für den in Fig. 1A gezeigten Einbauzustand die Anordnung des Endes der Verbindungswelle am festen Vorderachsgetriebe,
- Fig. 2B, 2C und 2D: für den in der Fig. 2A gezeigten Bereich die Zwischendemontagezustände gemäß der Fig. 1B, 1C und 1D.

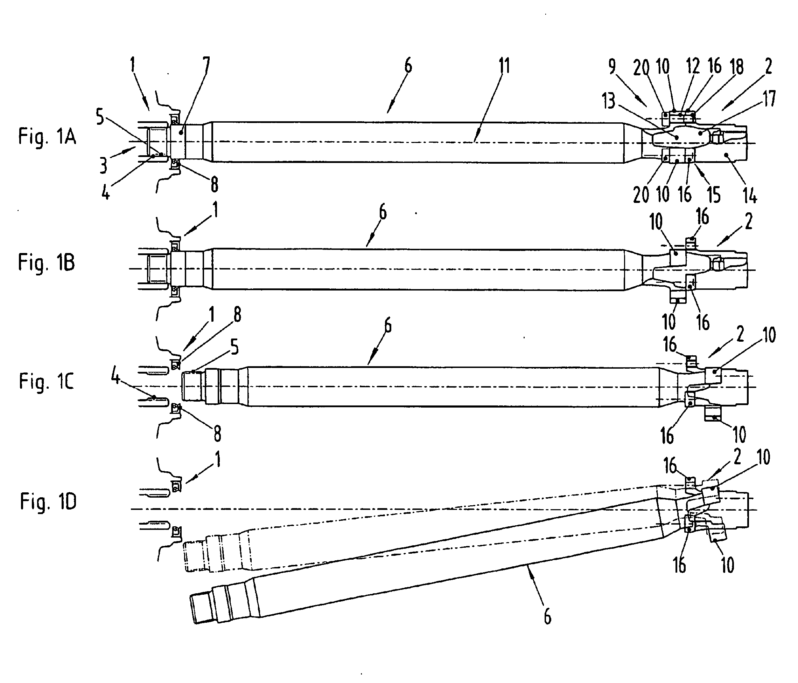

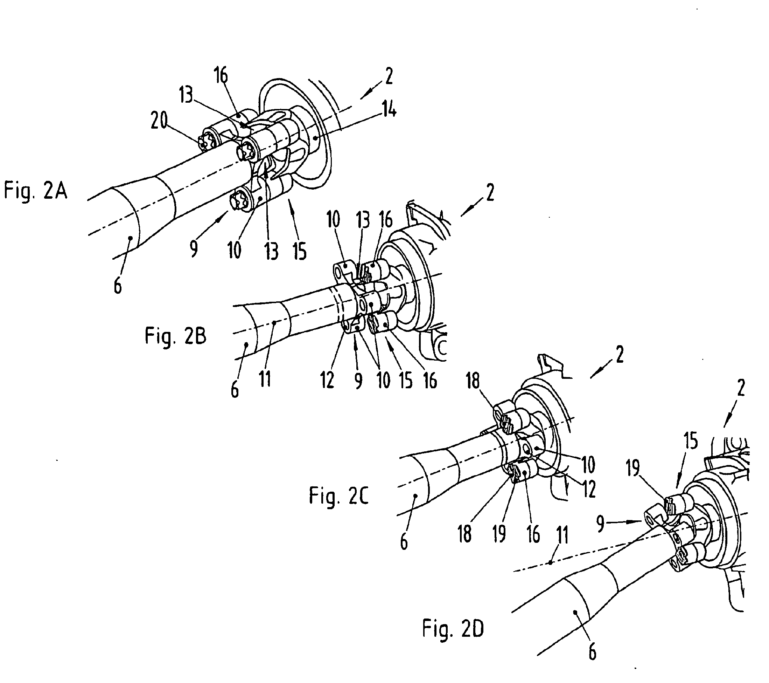

Bei der nachfolgenden Figurenbeschreibung wird zunächst auf die Darstellung der Fig. 1A und 2A Bezug genommen:

Gezeigt sind zwei ortsfest zueinander angeordnete Getriebeteile, nämlich Teile des Verteilergetriebes 1 und des Vorderachsgetriebes 2 eines Kraftfahrzeuges. Das Verteilergetriebe 1 weist eine Ausgangswelle 3 auf, die mit einer Steckverzahnung 4 versehen ist. In diese Steckverzahnung 4 ist ein gleichfalls mit einer Steckverzahnung 5 versehenes Endes einer Verbindungswelle 6 eingesteckt, womit die Ausgangswelle und die Verbindungswelle 6 kraftschlüssig miteinander verbunden sind. Die Verbindungswelle 6 weist einen Wellenabschnitt 7 auf, der in einem Lager 8 des Verteilergetriebes 1 gelagert ist. Die Verbindungswelle 6 weist im Bereich ihres anderen Endes einen Verbindungsflansch 9 auf, der mit drei radial nach außen gerichteten Armen 10 versehen ist, wobei die radial erstreckenden Symmetrieachsen der Arme 10 jeweils unter einem Winkel von 120° zueinander angeordnet sind. Der Verbindungsflansch 9 weist somit bezüglich der Arme 10 eine identische Teilung auf. Parallel zur Längsachse 11 der Verbindungswelle 6 durchsetzen die Arme 10 Durchgangslöcher 12. Zwischen benachbarten Armen 12 sind Zwischenräume 13 gebildet, somit sind drei Zwischenräume 13 vorgesehen.

Das Vorderachsgetriebe 2 weist eine Eingangswelle 14 auf, die unter dem Aspekt der erfindungsgemäßen Verbindung zwischen Verbindungswelle 6 und Eingangswelle 14 die zu kuppelnde Welle darstellt. Die Eingangswelle 14 ist im Bereich ihres der Verbindungswelle 6 zugewandten Endes entsprechend der Verbindungswelle 6 gestaltet. Sie weist somit einen Verbindungsflansch 15 auf, der mit mindestens zwei, vorzugsweise drei Armen 16 versehen ist, wobei zwischen benachbarten Armen 16 Zwischenräume 17 gebildet sind. Die Arme 16 sind, wie zuvor für die Arme 10 beschrieben, in identischer Teilung angeordnet; deren radiale Symmetrieachsen schließen somit jeweils einen Winkel von 120° ein. Die Arme 16 sind parallel zur Längsachse 11 der Verbindungswelle 6 und damit parallel zu der mit dieser Achse 11 fluchtenden Längsachse der Eingangswelle 14 (und auch der Ausgangswelle 3) mit Gewindebohrungen 18 versehen. Die Arme 10 und 16 weisen, dies ist nur bezüglich der Arme 16 ersichtlich, auf den einander zugewandten Seiten radial gerichtete Zähne 19 auf, wobei die Zähne 19 der Arme 16 mit Zähnen der Arme 10 in dem in den Fig. 1A und 2A gezeigten Einbauzustand der Verbindungswelle 6 kämmen, somit bezüglich einer Drehbewegung der Verbindungswelle 6 ein Formschluss zwischen den Verbindungsflanschen 9 und 15 hergestellt ist.

Die Verbindung der beiden Verbindungsflansche 9 und 15 erfolgt mittels dreier Schrauben 20, die die Durchgangslöcher 12 der Arme 10 durchsetzen und in die Gewindebohrungen 18 der Arme 16 eingeschraubt sind.

Ausgehend von diesem in den Fig. 1A und 2A veranschaulichten Einbauzustand erfolgt die Demontage der Verbindungswelle 6, indem zunächst die Schrauben 20 gelöst und entfernt werden. Anschließend wird die Verbindungswelle 6 geringfügig axial bezüglich der Eingangswelle 14 verschoben, wobei dies die Steckverzahnungen 4 und 5 zwischen Ausgangswelle 3 und Verbindungswelle 6 im Bereich des Verteilergetriebes 1 ermöglichen. Die Verbindungswelle 6 wird um eine solche Strecke axial verschoben, dass die Zähne der Verbindungsflansche 9 und 15 außer Eingriff gelangen, dann wird die Verbindungswelle 6 relativ zur Eingangswelle 14 um einen Winkel gedreht, so dass, bezogen auf eine Blickrichtung in der Längsachse 11, die Arme 10 der Verbindungswelle 6 mit den Zwischenräumen 17 zwischen den Armen 16 der Eingangswelle fluchten und entsprechend die Arme 16 der Eingangswelle 14 mit den Zwischenräumen 13 zwischen den Armen 10 der Verbindungswelle 6 fluchten. Dies entspricht insbesondere einer Schwenkbewegung von Verbindungswelle 6 und Eingangswelle 14 um einen Winkel von etwa 60° um die Längsachse 11. - Dieser Zustand ist in den Fig. 1B und 2B veranschaulicht.

Anschließend kann, da die Arme des einen Teils mit den Zwischenräumen des anderen Teils fluchten, die Verbindungswelle 6 in Richtung der Eingangswelle 14 axial verschoben werden. Hierbei werden die Arme 10 des Verbindungsflansches 9 der Verbindungswelle 6 in die Zwischenräume 17 des Verbindungsflansches 15 der Eingangswelle 14 eingeführt. Die axiale Verschiebestrecke der Verbindungswelle 6 ist hierbei so bemessen, dass die am anderen Ende der Verbindungswelle 6 befindliche Steckverzahnung 5 außer Eingriff mit der Steckverzahnung 4 der Ausgangswelle 3 gelangt und auch aus dem Lager 8 des Verteilergetriebes 1 herausgezogen ist. - Dieser Zustand ist in den Fig. 1C und 2C veranschaulicht.

Ausgehend von diesem Zustand kann nun aufgrund der Gestaltung der Verbindungsflansche 9 und 15 mit den Armen 10 und 16 sowie den Zwischenräumen 13 und 17 die Verbindungswelle 6 durch Kippen seitlich ausgeschwenkt werden, wie es für einen Zwischenzustand in Fig. 1D und für den Endzustand in den Fig. 1D und 2D veranschaulicht ist. In diesem Endzustand ist der Verbindungsflansch 9 der Verbindungswelle 6 bezüglich des Verbindungsflansches 15 der Eingangswelle 14 gekippt und es kann die Verbindungswelle 6, bezogen auf die in den Fig. 1D und 2D gezeigte Endkippposition dann in Richtung der Längsachse 11 der Verbindungswelle 6 vom Verbindungsflansch 15 abgehoben werden, womit die Verbindungswelle 6 von der Eingangswelle 14 getrennt ist.

Das Montieren der Verbindungswelle erfolgt in umgekehrter Reihenfolge, somit ausgehend von dem Zustand gemäß der Fig. 1D und 2D bis zum Zustand gemäß der Fig. 1A und 2A.

### Bezugszeichenliste

- 1: Verteilergetriebe
- 2: Vorderachsgetriebe
- 3: Ausgangswelle
- 4: Steckverzahnung
- 5: Steckverzahnung
- 6: Verbindungswelle
- 7: Wellenabschnitt
- 8: Lager
- 9: Verbindungsflansch
- 10: Arm
- 11: Längsachse
- 12: Durchgangsloch
- 13: Zwischenraum
- 14: Eingangswelle
- 15: Verbindungsflansch
- 16: Arm
- 17: Zwischenraum
- 18: Gewindebohrung
- 19: Zahn
- 20: Schraube

## Patentansprüche

1. Verbindung einer Verbindungswelle (6), insbesondere einer zwischen zwei ortsfesten Getriebeteilen (1, 2) angeordneten Verbindungswelle (6), mit einer zu kuppelnden Welle (14), bei der die Verbindungswelle (6) und die zu kuppelnde Welle (14) mittels Befestigungsmitteln (20) verbindbar sind, wobei die Verbindungswelle (6) endseitig einen Verbindungsflansch (9) aufweist, der mit mehreren Armen (10) versehen ist, wobei zwischen benachbarten Armen (10) Zwischenräume (13) gebildet sind, sowie die zu kuppelnde Welle endseitig einen Verbindungsflansch (15) aufweist, der mit mehreren Armen (16) versehen ist, wobei zwischen benachbarten Armen (16) Zwischenräume (17) gebildet sind, sowie in fluchtender Anordnung der Arme (10, 16) von Verbindungswelle (9) und zu kuppelnder Welle (14) diese Arme (10, 16) mittels der Befestigungsmittel (20) miteinander verbindbar sind, und bei gelösten Befestigungsmitteln (20) die Verbindungswelle (9) und die zu kuppelnde Welle (14) um deren Achse (11) relativ zueinander verschwenkbar sind und die Arme (10) der Verbindungswelle (6) in Flucht mit den Zwischenräumen (17) der zu kuppelnden Welle (14) bringbar sind, in dieser Stellung die Verbindungswelle (6) axial in Richtung der zu kuppelnden Welle (14) verschiebbar ist, wobei die Arme (10) der Verbindungswelle (6) die Zwischenräume (17) der zu kuppelnden Welle (14) durchsetzen sowie die Verbindungswelle (6) in dieser Stellung mit ihrem der zu kuppelnden Welle (14) abgewandten Ende seitlich ausschwenkbar ist.

2. Verbindung nach Anspruch 1, wobei die Arme (10, 16) der Verbindungsflansche (9, 15) von Verbindungswelle (6) und zu kuppelnder Welle (14) mit Formschlusselementen, insbesondere eine Verzahnung bildenden Elementen (19), versehen sind, wobei die Formschlusselemente (19) bei miteinander verbundenen Armen (10, 16) formschlüssig ineinander greifen.

3. Verbindung nach Anspruch 1 oder 2, wobei die Befestigungsmittel als Schrauben (20) ausgebildet sind, die Durchgangslöcher (12) in den Armen (10) des Verbindungsflansches (9) der Verbindungswelle (6) und Gewindebohrungen (18) in den Armen (16) des Verbindungsflansches (15) der gekuppelten Welle (14) durchsetzen.

4. Verbindung nach einem der Ansprüche 1 bis 3, wobei die Verbindungsflansche (9, 15) Arme (10, 16) aufweisen, die in identischer Teilung angeordnet sind.

5. Verbindung nach Anspruch 4, wobei der jeweilige Verbindungsflansch (9, 15) mindestens zwei oder mindestens drei Arme (10, 16) aufweist.

6. Verbindung nach einem der Ansprüche 1 bis 5, wobei das eine ortsfeste Getriebeteil (2) die zu kuppelnde Welle (14) und das andere ortsfeste Getriebeteil (1) eine zu kuppelnde Welle (3) aufweist, wobei die Drehachsen der zu kuppelnden Wellen (3, 14) und der Verbindungswelle (6) zusammenfallen.

7. Verbindung nach Anspruch 6, wobei die zu kuppelnde Welle (3) des anderen ortsfesten Getriebeteils (1) und die Verbindungswelle (6) ineinandersteckbar sind, insbesondere diese Wellen (3, 6) komplementäre Vielzahnwellen sind.

8. Verbindung nach Anspruch 6 oder 7, wobei die Verbindungswelle (6) um eine solche Strecke axial in Richtung der zu kuppelnden Welle (14) verschiebbar ist, dass die Verbindungswelle (6) außer Eingriff mit dem anderen ortsfesten Getriebeteil (1) gelangt.

9. Verbindung nach einem der Ansprüche 1 bis 8, wobei das eine ortsfeste Getriebeteil (2) ein Vorderachsgetriebe und das andere ortsfeste Getriebeteil (1) ein Hauptgetriebe, insbesondere ein Verteilergetriebe ist.

## Claims

1. Connection of a connecting shaft (6), in particular of a connecting shaft (6) arranged between two fixed transmission parts (1, 2), to a shaft (14) to be coupled, in which the connecting shaft (6) and the shaft (14) to be coupled are connectable by fastening means (20), the connecting shaft (6) having on the end face a connecting flange (9) which is provided with a plurality of arms (10), interspaces (13) being formed between adjacent arms (10), and the shaft to be coupled having on the end face a connecting flange (15) which is provided with a plurality of arms (16), interspaces (17) being formed between adjacent arms (16), and, in an aligned arrangement of the arms (10, 16) of the connecting shaft (6) and of the shaft (14) to be coupled, these arms (10, 16) being connectable to one another by the fastening means (20), and, with the fastening means (20) released, the connecting shaft (6) and the shaft (14) to be coupled being pivotable in relation to one another about their axis (11), and the arms (10) of the connecting shaft (6) being capable of being brought into alignment with the interspaces (17) of the shaft (14) to be coupled, in this position the connecting shaft (6) being displaceable axially in the direction of the shaft (14) to be coupled, the arms (10) of the connecting shaft (6) passing through the interspaces (17) of the shaft (14) to be coupled, and in this position the connecting shaft (6) being capable of being pivoted out laterally with its end facing away from the shaft (14) to be coupled.

2. Connection according to Claim 1, the arms (10, 16) of the connecting flanges (9, 15) of the connecting shaft (6) and of the shaft (14) to be coupled being provided with form-fit elements, in particular with elements (19) forming a toothing, the form-fit elements (19) engaging one in the other with form fit when the arms (10, 16) are connected to one another.

3. Connection according to Claim 1 or 2, the fastening means being designed as screws (20) which pass through passage holes (12) in the arms (10) of the connecting flange (9) of the connecting shaft (6) and threaded bores (18) in the arms (16) of the connecting flange (15) of the coupled shaft (14).

4. Connection according to one of Claims 1 to 3, the connecting flanges (9, 15) having arms (10, 16) which are arranged in an identical spacing.

5. Connection according to Claim 4, the respective connecting flange (9, 15) having at least two or at least three arms (10, 16).

6. Connection according to one of Claims 1 to 5, one fixed transmission part (2) having the shaft (14) to be coupled and the other fixed transmission part (1) having a shaft (3) to be coupled, the axes of rotation of the shafts (3, 14) to be coupled and of the connecting shaft (6) coinciding.

7. Connection according to Claim 6, the shaft (3) to be coupled of the other fixed transmission part (1) and the connecting shaft (6) being pluggable one into the other, in particular these shafts (3, 6) being complementary multi-tooth shafts.

8. Connection according to Claim 6 or 7, the connecting shaft (6) being displaceable axially in the direction of the shaft (14) to be coupled over a distance such that the connecting shaft (6) comes out of engagement with the other fixed transmission part (1).

9. Connection according to one of Claims 1 to 8, one fixed transmission part (2) being a front-axle transmission and the other fixed transmission part (1) being a main transmission, in particular a power divider transmission.

## Revendications

1. Liaison d'un arbre de liaison (6), en particulier d'un arbre de liaison (6) disposé entre deux parties de transmission (1, 2) fixes, à un arbre devant être accouplé (14), dans laquelle l'arbre de liaison (6) et l'arbre devant être accouplé (14) peuvent être reliés à l'aide de moyens de fixation (20), l'arbre de liaison (6) comprenant à son extrémité une bride de liaison (9) qui est pourvue de plusieurs bras (10), des espaces intermédiaires (13) étant formés entre des bras adjacents (10), et l'arbre devant être accouplé comprenant à son extrémité une bride de liaison (15) qui est pourvue de plusieurs bras (16), des espaces intermédiaires (17) étant formés entre des bras adjacents (16), et lorsque les bras (10, 16) de l'arbre de liaison (6) et de l'arbre devant être accouplé (14) sont disposés en affleurement, ces bras (10, 16) pouvant être reliés les uns aux autres à l'aide des moyens de fixation (20), et lorsque les moyens de fixation (20) sont desserrés, l'arbre de liaison (6) et l'arbre devant être accouplé (14) pouvant être pivotés l'un par rapport à l'autre autour de leur axe (11) et les bras (10) de l'arbre de liaison (6) pouvant être amenés en affleurement avec les espaces intermédiaires (17) de l'arbre devant être accouplé (14), et dans cette position, l'arbre de liaison (6) pouvant être déplacé axialement en direction de l'arbre devant être accouplé (14), les bras (10) de l'arbre de liaison (6) traversant les espaces intermédiaires (17) de l'arbre devant être accouplé (14), et l'arbre de liaison (6), dans cette position, pouvant être pivoté latéralement vers l'extérieur par l'intermédiaire de son extrémité opposée à l'arbre devant être accouplé (14).

2. Liaison selon la revendication 1, dans laquelle les bras (10, 16) des brides de liaison (9, 15) de l'arbre de liaison (6) et de l'arbre devant être accouplé (14) sont pourvus d'éléments d'engagement par complémentarité de formes, en particulier d'éléments (19) formant une denture, les éléments d'engagement par complémentarité de formes (19) s'engageant les uns dans les autres par complémentarité de formes lorsque les bras (10, 16) sont reliés les uns aux autres.

3. Liaison selon la revendication 1 ou 2, dans laquelle les moyens de fixation sont réalisés sous forme de vis (20) qui traversent des trous débouchants (12) dans les bras (10) de la bride de liaison (9) de l'arbre de liaison (6) et des alésages filetés (18) dans les bras (16) de la bride de liaison (15) de l'arbre accouplé (14).

4. Liaison selon l'une quelconque des revendications 1 à 3, dans laquelle les brides de liaison (9, 15) comprennent des bras (10, 16) qui sont disposés suivant une répartition identique.

5. Liaison selon la revendication 4, dans laquelle la bride de liaison (9, 15) respective comprend au moins deux ou au moins trois bras (10, 16).

6. Liaison selon l'une quelconque des revendications 1 à 5, dans laquelle l'une des parties de transmission (2) fixes comprend l'arbre devant être accouplé (14) et l'autre partie de transmission (1) fixe comprend un arbre devant être accouplé (3), dans laquelle les axes de rotation des arbres devant être accouplés (3, 14) et de l'arbre de liaison (6) coïncident.

7. Liaison selon la revendication 6, dans laquelle l'arbre devant être accouplé (3) de l'autre partie de transmission (1) fixe et l'arbre de liaison (6) peuvent être emboîtés l'un dans l'autre, en particulier ces arbres (3, 6) sont des arbres dentelés complémentaires.

8. Liaison selon la revendication 6 ou 7, dans laquelle l'arbre de liaison (6) peut être déplacé axialement dans la direction de l'arbre devant être accouplé (14) sur une distance telle que l'arbre de liaison (6) se désengage de l'autre partie de transmission (1) fixe.

9. Liaison selon l'une quelconque des revendications 1 à 8, dans laquelle l'une des parties de transmission (2) fixes est une transmission d'essieu avant et l'autre partie de transmission (1) fixe est une transmission principale, en particulier une boîte de transfert.
